(19) Europäisches Patentamt

European Patent Office

Office européen des brevets

(11) Numéro de publication : **0 454 517 A1**

## (12) DEMANDE DE BREVET EUROPEEN

(21) Numéro de dépôt : **91400865.1**

(22) Date de dépôt : **29.03.91**

(51) Int. Cl.⁵ : **C08K 5/09, C08L 67/00,**
**// (C08L67/00, C08K5:09,**
**C08L33:12)**

(30) Priorité : **05.04.90 FR 9004354**

(43) Date de publication de la demande :
**30.10.91 Bulletin 91/44**

(84) Etats contractants désignés :
**AT BE CH DE DK ES FR GB GR IT LI LU NL SE**

(71) Demandeur : **CRAY VALLEY SA**
**Tour Total, 24 cours Michelet**
**F-92800 Puteaux (FR)**

(72) Inventeur : **Behar, Gilles**
**43 rue de l'Abbayette**
**F-62223 Anzin Saint-Aubin (FR)**
Inventeur : **Oginski, Jean-Claude**
**19 rue de Noeux**
**F-62113 Verquigneul (FR)**
Inventeur : **Martinet, Alain**
**22 Résidence La Bougie**
**F-62223 Saint-Nicolas-Lez-Arras (FR)**

(74) Mandataire : **Dubost, Thierry Pierre**
**Cray Valley SA, BP 22**
**F-60550 Verneuil en Halatte (FR)**

(54) Compositions de résines polyesters insaturés.

㊙ — Compositions moulables de résines polyesters insaturés, comprenant un agent de démoulage.
— L'agent de démoulage est constitué du sel de calcium de l'acide montanique.
— Application à la fabrication de réflecteurs de lampes.

EP 0 454 517 A1

La présente invention concerne de nouvelles compositions convenant pour la fabrication de réflecteurs de lampes, elle a plus particulièrement pour objet de nouvelles compositions de résines polyesters insaturés adaptées pour la fabrication de réflecteurs de lampes pour projecteurs, phares anti-brouillard ou phares orientables de véhicules automobiles.

Il est connu de fabriquer des corps en forme de cuvette d'un réflecteur de lampe en polymérisant une composition moulable de résines polyesters insaturés contenant un agent anti-retrait, des fibres de verre, des charges et un agent de démoulage. Les agents anti-retrait connus utilisés jusqu'à présent sont le plus souvent dans le cas de la fabrication de réflecteurs de lampes constitués de polyvinyl alcool, de polyuréthane, plus rarement de polyéthylène, ou de polystyrène. En ce qui concerne les agents de démoulage, on a proposé jusqu'à présent le plus souvent le stéarate de zinc ou le stéarate de calcium, de lithium, de baryum, de magnésium...

Or la Demanderesse a trouvé que les agents anti-retrait utilisés jusqu'à présent ne permettaient pas d'obtenir des réflecteurs présentant une surface qui reste suffisamment parfaite dans le temps et conserver des propriétés optiques irréprochables. Dans cet ordre d'idées la Demanderesse a constaté que les agents de démoulage utilisés jusqu'alors provoquaient un voile sur la surface réfléchissante en raison de la vaporisation de l'agent de démoulage qui se condense ensuite sur la surface réfléchissante aux températures élevées que l'on rencontre au cours de l'utilisation du réflecteur à cause de l'utilisation des ampoules de haute intensité et de la réduction volumétrique des paraboles liée à des raisons à la fois d'aérodynamisme et d'esthétique. Cette vaporisation de l'agent de démoulage se matérialise par une perte au poids du réflecteur.

Le besoin se fait donc sentir de mettre au point des réflecteurs qui présentent une perte au poids minimum et qui conservent ainsi des propriétés optiques irréprochables dans le temps.

La présente invention concerne de nouvelles compositions moulables de résines polyesters insaturés convenant notamment pour la fabrication de réflecteurs de lampes, contenant une résine polyester insaturé dans du styrène, des charges, des fibres de verre, un agent anti-retrait, et un agent de démoulage, caractérisées en ce que l'agent de démoulage est constitué du sel de calcium de l'acide montanique.

Selon une autre caractéristique de l'invention l'agent anti-retrait utilisé dans les compositions selon l'invention est un polymère de méthacrylate de méthyle (PMMA) ayant un poids moléculaire supérieur à 100.000 environ.

On a trouvé que la mise en oeuvre de telles compositions permet d'obtenir des réflecteurs qui ne présentent pas tous les défauts connus jusqu'alors.

Selon l'invention, l'agent de démoulage mis en oeuvre dans les compositions de l'invention est constitué de montanate de calcium. Le montanate de calcium mis en oeuvre dans les compositions de l'invention est en réalité un sel de calcium d'une coupe d'acide gras en $C_{24}$, $C_{26}$, $C_{30}$, $C_{32}$ et $C_{28}$ l'acide montanique de formule $C_{28}H_{57}COOH$ étant majoritaire. Ce sel est fabriqué à partir d'un produit naturel, la cire de montan, qui est extraite de lignites. Ce sel est fabriqué en oxydant la cire de montan à l'aide par exemple d'un mélange sulfochromique à chaud : les produits d'oxydation obtenus (acides gras) sont ensuite neutralisés par du calcium. Dans la description de l'invention on désignera donc par le terme "montanate de calcium" ce qui en réalité correspond à un mélange de sels de plusieurs acides, celui de l'acide montanique en $C_{28}$ étant majoritaire. L'analyse permet de trouver que le produit commercial vendu sous le nom de montanate de calcium contient environ 5% de calcium et jusqu'à environ 3% en poids d'acides libres.

On a trouvé que la mise en oeuvre de l'agent de démoulage selon l'invention permettait de supprimer pratiquement le phénomène de condensation, que l'on observe avec les agents de démoulage connus jusqu'alors, ce qui se solde par une perte au poids minimum des réflecteurs. L'agent de démoulage selon l'invention est utilisé de préférence en quantité comprise entre environ 1 et 8% en poids par rapport au poids de la résine polyester insaturé et du styrène mis en oeuvre avec la résine polyester.

Selon une autre caractéristique de l'invention, l'agent anti-retrait mis en oeuvre dans les compositions de l'invention est constitué d'un polymère de méthacrylate de méthyle (PMMA) qui présente un poids moléculaire supérieur à 100 000 et de préférence voisin de 130 000. On a trouvé que la mise en oeuvre de ce PMMA avec le montanate de calcium dans les compositions selon l'invention permet d'obtenir les meilleurs résultats en ce qui concerne la perte de poids des réflecteurs de lampes.

De façon connue, l'agent anti-retrait est mis en oeuvre en quantité comprise entre environ 10 et 20% en poids par rapport au poids de la résine polyester additionnée de styrène.

De façon connue des réflecteurs de lampes selon l'invention sont obtenus en utilisant des compositions de résines polyesters insaturés moulables. Ces compositions "compositions de moulages dans la masse" (en anglais bulk molding compounds : BMC) sont constituées de résines polyesters insaturés dans le styrène additionnées d'un peroxyde organique comme catalyseur de polymérisation, de charges comme le carbonate de calcium, de 10 à 30% environ en poids de fibres de verre, de l'agent de démoulage constitué de montanate de calcium selon l'invention et de l'agent anti-retrait.

Après avoir réalisé le mélange, la composition moulable est introduite dans un moule de forme appropriée, le moule est ensuite fermé et chauffé pour polymériser la composition. Le moulage peut être réalisé en utilisant toutes les techniques connues dans cette technologie : moulage par compression, transfert, injection/compression et injection. Pendant le moulage, le moule est maintenu à une température comprise entre 130 et 180°C environ et à une pression de 30 à 100 bars environ au plus pendant 2 minutes.

Après démoulage le réflecteur est ensuite soumis à un traitement d'aluminage de façon à conduire à l'obtention de phares. Ce traitement d'aluminage est de préférence réalisé en déposant préalablement sur le réflecteur un vernis constitué de résines polyester, époxy ou acrylique.

Les exemples suivants illustrent la présente invention. Les quantités sont exprimées en parties en poids.

Exemple 1 (comparatif)

On prépare une composition "témoin" à partir des ingrédients suivants. La résine polyester insaturé (présentant les caractéristiques suivantes : Masse volumique : 1,11 g/cm$^3$ ; Viscosité à 25°C : 20 dPa.s ; Extrait sec : 67%) est vendue sous la marque NORSODYNE par la Société CRAY VALLEY SA.

                                                              Parties en poids

| | | |
|---|---|---|
| – | Résine polyester insaturé en solution dans le styrène | 60 |
| – | Agent anti-retrait constitué de polyuréthane (poids moléculaire environ 8000, extrait sec 65%) en solution dans le styrène | 20 |
| – | Caoutchouc thermoplastique en solution dans le styrène extrait sec : 30% | 20 |
| – | Peroctoate de butyle tertiaire | 2 |
| – | Parabenzoquinone | 0,02 |
| – | Carbonate de calcium | 240 |
| – | Colorant noir organique | 10 |
| – | Fibres de verre (longueur : 6 mm) | 60 |
| – | Stéarate de calcium | 6 |

Exemple 2

On prépare une autre composition à partir des produits suivants :

3

|   |   |   |
|---|---|---|
| – | Résine polyester insaturé en solution dans le styrène de l'exemple 1 | 60 |
| – | PMMA en solution à 40% (vendu sous la marque Altulite P2779 par la Société ALTULOR) | 40 |
| – | Peroctoate de butyle tertiaire | 2 |
| – | Parabenzoquinone | 0,02 |
| – | Carbonate de calcium | 240 |
| – | "Montanate de calcium" : taux de calcium : 5,1%, acides gras libres : 3%, humidité à 105°C : 2% Ce produit est vendu sous la marque STAVINOR par la Société MT-CHIMIE | 4 |
| – | Colorant noir organique | 10 |
| – | Fibres de verre (6 mm de longueur) | 60 |

Les compositions des exemples 1 et 2 sont moulées par injection à 150°C dans des moules pour fabriquer des paraboles de phares (réflecteurs de lampes). Le tableau 1 résume les résultats des mesures réalisées sur les produits finis.

TABLEAU 1

| Caractéristiques | Exemple 1 | Exemple 2 | Exemple 2 sans colorant |
|---|---|---|---|
| Retrait (gonflement) | + 0,12% | + 0,04% | + 0,04% |
| Pertes en poids : 1/2 h à 220°C | 0,46% | 0,21% | 0,21% |
| 24 h à 200°C | 1,23% | 0,49% | 0,57% |

Exemple 3

L'exemple 2 est répété mais le "montanate de calcium" est remplacé par le stéarate de calcium.

Exemple 4

L'exemple 3 est répété mais on met en oeuvre 20 parties en poids de PMMA au lieu de 40 et 20 parties de polyvinyl alcool.

Le tableau 2 suivant résume les résultats obtenus sur les paraboles de phares obtenues par moulage.

TABLEAU 2

| Caractéristiques | Exemple 3 | Exemple 4 |
|---|---|---|
| Pertes en poids | | |
| 1/2 h - 220°C | 0,38% | 0,40% |
| 24 h - 200°C | 0,90% | 1,10% |

### Exemples 5 à 7

L'exemple 1 est répété mais le stéarate de calcium est remplacé par divers agents de démoulage. Le tableau 3 résume les résultats obtenus sur les paraboles de phares fabriquées par moulage.

TABLEAU 3

| Essais | Agent de démoulage | Perte en poids | |
|---|---|---|---|
| | | 1/2 h-220°C | 24h-200°C |
| 5 | stéarate de lithium | 0,24% | 0,77% |
| 6 | stéarate de magnésium | 0,26% | 0,7% |
| 7 | montanate de calcium | 0,17% | 0,60% |

### Revendications

1 - Compositions moulables de résines polyesters insaturés, contenant une résine polyester insaturé dans du styrène, des charges, des fibres de verre, un agent anti-retrait, et un agent de démoulage, caractérisées en ce que l'agent de démoulage est constitué du sel de calcium de l'acide montanique.

2 - Compositions selon la revendication 1, caractérisées en ce que l'agent anti-retrait est un polymère de méthacrylate de méthyle ayant un poids moléculaire supérieur à 100 000.

3 - Compositions selon l'une des revendications 1 et 2, caractérisées en ce que le montanate de calcium mis en oeuvre est un sel de calcium d'une coupe d'acide gras en $C_{24}$, $C_{26}$, $C_{30}$, $C_{32}$ et $C_{28}$, l'acide montanique de formule $C_{28}H_{57}COOH$ étant majoritaire.

4 - Compositions selon l'une des revendications 1 à 3, caractérisées en ce que le sel de calcium de l'acide montanique est utilisé en quantité comprise entre 1 et 8% en poids par rapport au poids de la résine polyester insaturé et du styrène.

5 - Compositions selon l'une des revendications 1 à 4, caractérisées en ce que l'agent anti-retrait est mis en oeuvre en quantité comprise entre 10 et 20% en poids par rapport au poids de la résine polyester insaturé additionnée de styrène.

6 - Utilisation du sel de calcium de l'acide montanique comme agent de démoulage de résines polyesters insaturés.

7 - Réflecteurs de lampes obtenus à partir d'une composition moulable selon l'une des revendications 1 à 5.

Office européen
des brevets

# RAPPORT DE RECHERCHE EUROPEENNE

Numéro de la demande

EP    91 40 0865
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0222977 (THE BUDD CO)<br>* revendication 1 *<br>*Page 19, examples C et D*<br>---- | 1, 2 | C08K5/09<br>C08L67/00<br>//(C08L67/00;<br>K5:09; L33/12) |
| A | EP-A-0023634 (BASF AG)<br>* revendication 1 *<br>*page 23, example 6*<br>--- | 1 | |
| A | DE-A-2648410 (LUCAS IND LTD)<br>* page 4, alinéa 7; revendications 1-4 *<br>--- | 1, 7 | |
| A | PATENT ABSTRACTS OF JAPAN<br>vol. 4, no. 012 (C-071) 29 janvier 1980,<br>& JP-A-54 148833 (TOYO BOSEKI KK) 21 novembre 79,<br>* le document en entier *<br>--- | 1 | |
| A | DATABASE WPIL ,NO. 83-720382, DERWENT PUBL. LTD.<br>LONDON,& JP-A-58-103552 (TOYOBO K.K.) 20.06.1983<br>*abrégé*<br>--- | 1 | |
| A | CHEMICAL ABSTRACTS, vol. 111, no. 20, 13 novembre 1989<br>Columbus, Ohio, USA<br>"& JP-A-01056757 ,PLAS TECH CORP, 03.03.1989"<br>page 59; colonne de droite; ref. no. 175433F<br>* abrégé *<br>---- | 1 | **DOMAINES TECHNIQUES RECHERCHES (Int. CL5 )**<br><br>C08K<br>C08L<br>F21V<br>C08G |
| X | CHEMICAL ABSTRACTS, vol. 102, no. 2, 14 janvier 1985<br>Columbus, Ohio, USA<br>"& DD-A-210646, VEB PETROLCHEMISCHES KOMBINAT SCHWEDT, 20.06.1984"<br>page 53; colonne de gauche; ref. no. 7832F<br>* abrégé *<br>--- | 6 | |

-/--

Le présent rapport a été établi pour toutes les revendications

| Lieu de la recherche | Date d'achèvement de la recherche | Examinateur |
|---|---|---|
| BERLIN | 15 JUILLET 1991 | VOIGTLAENDER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................
& : membre de la même famille, document correspondant

EPO FORM 1503 03.82 (P0402)

EP 0 454 517 A1

Office européen
des brevets

**RAPPORT DE RECHERCHE EUROPEENNE**

Numero de la demande

EP   91 40 0865
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | CHEMICAL ABSTRACTS, vol. 114, no. 2, 14 janvier 1991<br>Columbus, Ohio, USA<br>"& JP-A-02185560, SHOWA HIGHPOLYMER CO LTD, 19.07.1990"<br>page 46; colonne de gauche; ref. no. 7874U<br>* abrégé *<br>----- | 6 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| BERLIN | 15 JUILLET 1991 | VOIGTLAENDER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

7